# EUROPÄISCHE PATENTSCHRIFT

(11) **EP 0 444 177 B1**
(45) Veröffentlichungstag und Bekanntmachung des Hinweises auf die Patenterteilung: **16.06.1993**
(21) Anmeldenummer: 90913812.5
(22) Anmeldetag: 07.09.1990
(51) Int. Cl.: B65G 47/64

(54) **MODULARE FÖRDEREINRICHTUNG**
MODULAR CONVEYOR
APPAREIL DE TRANSPORT MODULAIRE

(30) Priorität: 15.09.1989 DE 3930963
(43) Veröffentlichungstag der Anmeldung: 04.09.1991
(73) Patentinhaber: Licentia Patent-Verwaltungs-GmbH, 60596 Frankfurt (DE)
(72) Erfinder: MALOW, Siegmar, D-7750 Konstanz 19 (DE)
(74) Vertreter: Vogl, Leo, Dipl.-Ing.
(86) Internationale Anmeldenummer: EP9001508
(87) Internationale Veröffentlichungsnummer: WO9104211

(56) Entgegenhaltungen:
- DE-C- 231 142
- FR-A- 2 104 687
- GB-A- 1 261 659
- US-A- 4 779 715

## Beschreibung

Die vorliegende Erfindung betrifft ein modulares Fördersystem für Transport und Verteilung von Gütern unterschiedlicher Art, Form, Oberfläche, Gewicht und Konsistenz. Bereits bekannt sind Fördersysteme, bei denen die Güter über Transportbänder mit Weichen, Rollen, querlaufenden Bändern transportiert und an unterschiedlichen Zielorten ausgeschleust werden können. Hierbei müssen die Güter den Bandgegebenheiten angepaßt sein. Sicherer Transport und störungsfreie Verteilung sind sehr stark abhängig von den Reibverhältnissen der Güter am Band. Insbesondere lose und leichte Güter, wie Papier, lose Zeitungen und Magazine können vom Band fallen oder weggeweht werden. Bei diesen Gütern besteht auch die Gefahr von Störungen an Weichen und Abzweigungen und im Bereich der Ausschleusung. Andererseits besteht bei in Plastik eingeschweißtem Gut die Gefahr des Anklebens ans Förderband. Weiter kommt es bei solchen Anlagen, wenn Führungsmittel, wie Gleitebenen o.ä. an den Seiten der Förderbänder benutzt werden, zu Relativbewegungen des fördernden Gutes zu diesen Führungsmitteln, so daß die Gefahr von Beschädigungen des fördernden Gutes besteht.

Andere Fördersysteme basieren auf Behältertransport auf Schienen, Rollen oder Rädern, oder auf Kippschalentechniken. Die Nachteile dieser Systeme bestehen darin, daß die Behälter oder Schalen eine Zurückführung erfordern, und daß beim Ausschleusen des Transportgutes durch ballistischen Abwurf größere Kräfte auf die Güter ausgeübt werden.

Aus der Patentschrift FR-A-2104687 ist bereits eine modulare Fördereinrichtung bekannt, bei der jedes Förderelement zur Ausschleusung des Förderguts gegenüber dem vorangehenden Element drehbar angeordnet ist. Die Drehung erfolgt dabei derart, daß jedes Element als Ganzes starr um einen hinteren Drehpunkt bewegt wird, wobei im Transportweg zwischen dem gedrehten Element und dem vorangehenden Element eine Lücke entsteht. Zur Überbrückung der Lücke sind zwischen den einzelnen Förderelementen Rollen vorgesehen.

Die vorliegende Erfindung soll die Nachteile bisheriger Fördereinrichtungen vermeiden. Insbesondere ist es Aufgabe der vorliegenden Erfindung, ein Fördersystem anzugeben, bei dem eine definierte und sichere Führung des Gutes entlang eines durchgehenden Transportweges während des gesamten Transport- und Verteilprozesses stattfindet, bei der Kontakt und Reibung des Gutes an Führungsmitteln und Weichen minimiert wird, bei der keine undefinierten Zustände des Gutes während des Ausschleusungsvorganges auftreten und bei der der Einfluß der Oberflächenbeschaffenheit des Transportgutes auf den Transport- und Verteilprozess minimiert ist.

Die angegebene Aufgabe wird erfindungsgemäß durch die Merkmale des Anspruchs 1 gelöst.

Die Erfindung geht von der Erkenntnis aus, daß bei einem Fördersystem eine Relativbewegung zwischen Gut und Transportmittel vermieden und gleichzeitig eine definierte Führung und Ausschleusung des Gutes dadurch bewirkt werden kann, daß das Fördersystem aus Transportmodulen besteht, bei denen parallel zu einem Bodenfördermittel zwei seitliche Führungselemente angeordnet sind, Bodenfördermittel und seitliche Führungsmittel auf einem Rahmengestell montiert sind, das Rahmengestell jedes Transportmoduls bei laufendem Bodenfördermittel so bewegbar ist, daß das Gut aus dem gegebenen Transportmodul ausgeschleust werden kann, wobei die seitlichen Führungsmittel um feststehende hintere Achsen drehbar sind und die Module jeweils an einem Zwischenstück zusammenstoßen und einen durchgehenden Transportweg bilden.

Gegenüber den bekannten Fördersystemen weist die erfindungsgemäße Fördereinrichtung den Vorteil eines auch während des Ausschleusungsvorgangs durchgehenden Transportweges auf.

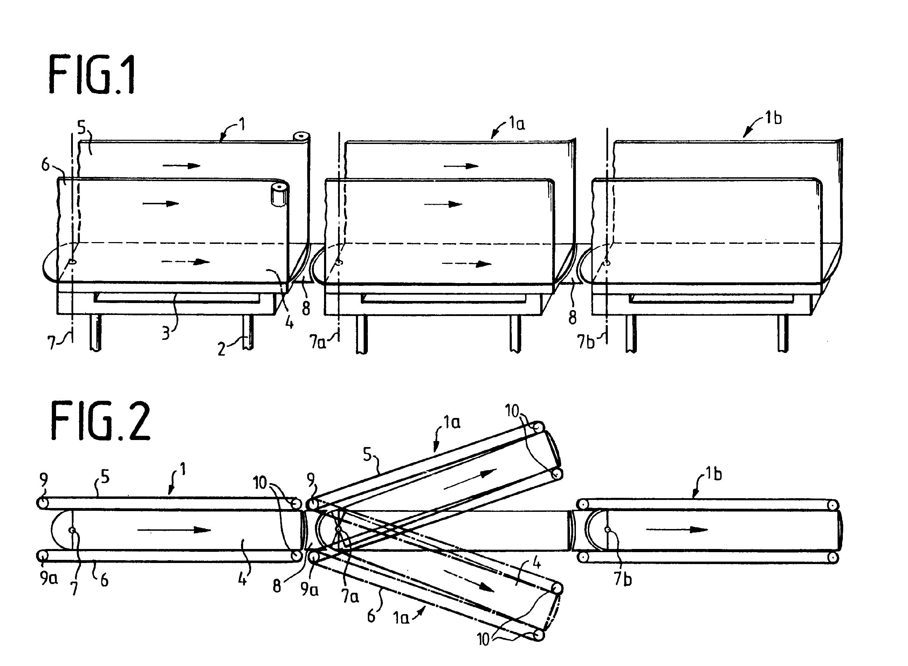

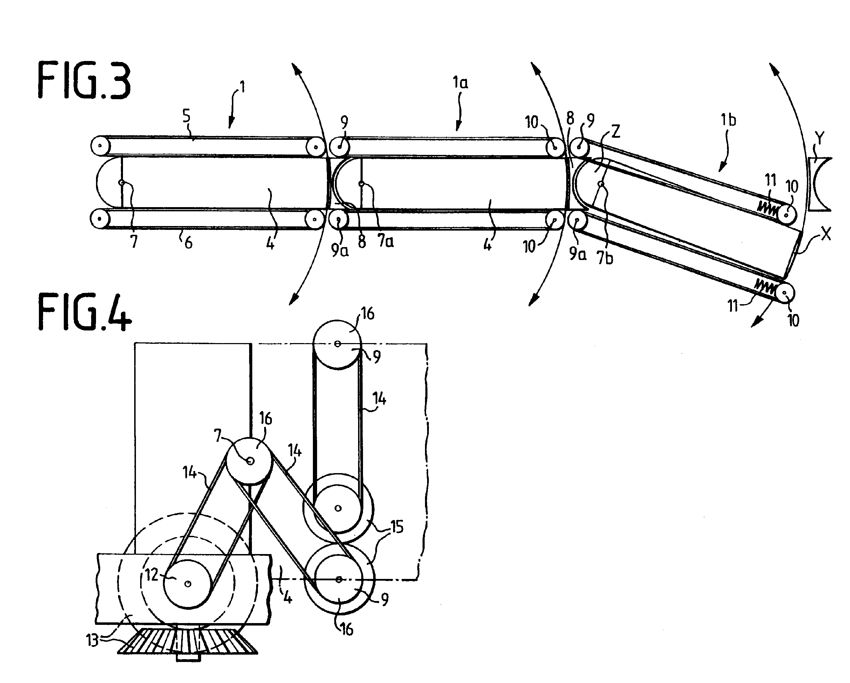

Im folgenden wird die Erfindung anhand von Zeichnungen veranschaulicht. In Fig. 1 ist eine Sequenz von drei aneinandergereihten Transportmodulen 1, 1a, 1b des erfindungsgemäßen Transportsystems gezeigt. Die Transportrichtung ist von Modul 1 nach Modul 1a gerichtet. Ein Transportmodul 1 besteht danach aus einem Grundgestell 2, auf dem ein drehbares Rahmengestell 3 montiert ist. Als Bodenfördermittel wird ein Unterflurband verwendet, während zwei Seitenbänder 5 und 6 als seitliche Führungselemente vorgesehen sind. Zur Vereinfachung sind die die Bänder 4, 5, 6 führenden und antreibenden Laufrollen in Fig. 1 nicht mitgezeichnet. Das Rahmengestell 3 ist gegenüber dem Gestell 2 um die Drehachse 7 drehbar. Die Transportmodule 1 und 1a sind durch ein Zwischenstück 8, das die Funktion eines Gleitblechs hat, verbunden. Das Zwischenstück 8 ist, wie im Zusammenhang mit Fig. 3 noch ausgeführt werden wird, derart ausgestaltet, daß sowohl eine unbehinderte Drehbewegung des Transportmoduls 1 um die Drehachse 7, als auch eine Drehbewegung des Transportmodul 1a um die Drehachse 7a ermöglicht wird. Bei nicht ausgeschwenktem Transportmodul 1 folgt so über das Zwischenstück 8 ein Transport von Transportmodul 1 nach Transportmodul 1a. Um zusätzliche Beschleunigungen des Transportguts beim Übergang von einem Transportmodul zum anderen zu vermeiden, laufen die Transportbänder aller Module vorzugsweise mit gleicher Geschwindigkeit. Ebenso laufen zur Vermeidung von Reibung zwischen Transportgut und Transporteinrichtung die Seitenbänder 5, 6, jedes Moduls synchron mit dem zugehörigen Unterflurband 4.

Fig. 2 zeigt eine Obenansicht eines erfindungsgemäßen Transportsystem. Hierbei bezeichnen 9 und 9a jeweils feststehende Laufrollen der Transportmodule 1 und 1a für die Seitenbänder 5 und 6. Die Laufrollen 10 sind so im Rahmengestell 3 angebracht, daß bei der Drehbewegung um den Drehpunkt 7 des Rahmengestells keine Veränderung in der Spannung oder Laufgeschwindigkeit der Seitenbänder 5, 6, auftritt (s. Fig. 3).

Der Betrieb der erfindungsgemäßen Fördereinrichtung wird zunächst prinzipiell anhand der Figuren 1 und 2 dargestellt. Wie bereits erwähnt, erfolgt ein Transport vom Transportmodul 1 zum 1a dann, wenn bei laufenden Transportbändern die Module 1 und 1a am Zwischenstück 8 zusammenstoßen und einen durchgehenden Transportweg bilden. Das Ausschleusen von Transportgut erfolgt dadurch, daß ein Transportmodul, in Fig. 2 das Transportmodul 1a, in die Drehachse 7 geschwenkt wird. Das auszuschleusende Transportgut läuft über das Zwischenstück 8 aus einem ersten Transportmodul in einen zweiten ausgeschwenkten Transportmodul ein und wird von den Bändern dieses Transportmoduls zu seinem offenen Ende hin transportiert. Es sei darauf hingewiesen, daß in Fig. 1 und 2 das Ausschwenken in einer Ebene gezeigt ist, daß aber natürlich genauso gut eine Schwenkbewegung nach oben oder unten zum Ausschleusen möglich ist, was dadurch erreicht werden kann, daß die Seitenbänder mit dem gleichen Kopplungsstück 8 versehen werden, wie es nach Fig. 3 für das Unterflurband vorgesehen ist.

Fig. 3 veranschaulicht die Verhältnisse bei einer Drehbewegung eines Moduls 1b um die Drehachse 7b. Jedes Zwischenstück 8 weist einen Teil X auf, mit einer kreissegmentförmigen Oberfläche, die in eine entsprechend geformte konkave Oberfläche des feststehenden Teils Y eingepaßt ist. Dadurch wird eine freie Bewegung um den Drehpunkt 7b möglich. Eine zweite konkave Oberfläche des Teils Y wirkt zusammen mit dem halbkreisförmigen oder annähernd halbkreisförmigen Teil Z, so daß ebenfalls eine freie Bewegung um die Drehachse 7b möglich ist. Das Unterflurband läuft mit einem schmalen Spalt vor den Kanten der Teile X und Z des Zwischenstücks 8. Ein wesentlicher Effekt dieser Ausbildung der Teile X, Y, Z, des Zwischen- oder Kupplungsstücks ist, daß bei einer Schwenkbewegung keine Veränderung der Spalte zwischen den Förderelementen entsteht. Zur Minimierung von Reibung zwischen Transportgut und Zwischenstück 8 ist diese vorzugsweise mit einer geglätteten und/oder geeignet geschichteten Oberfläche versehen. Da die hinteren Rollen 9 und 9a der Seitenbänder beim Schwenkvorgang feststehen, wird ein sich verändernder Spalt an den Seitenwänden zwischen Modul 1a und 1b verhindert. Beim Schwenkvorgang muß das Unterflurband starr um die Drehachse bewegt werden, um Verdrehungen der Bandoberfläche zu vermeiden. Andererseits erfordern die sich verändernden geometrischen Verhältnisse bei der Schwenkung eine federnde Lagerung der vorderen Rollen. In Fig. 3 ist dies durch Federelemente 11 angedeutet. Hierauf kann allerdings dann verzichtet werden, wenn durch eine parallele Führung der vorderen Rolle dafür gesorgt wird, daß die Seitenbänder in Form eines Parallelogramms geführt werden.

Der Antrieb der Transportbänder, der Transportmodule, kann auf verschiedene Art erfolgen. Bei einer Ausführungsform verfügt jedes Transportband über einen separaten geregelten Antrieb, wobei über eine Regelung auch gewährleistet wird, daß die drei Bänder jedes Moduls untereinander synchron sind. Über eine Regelung wird ebenfalls Synchronität der Transportbänder bzw. Antriebe der übrigen Transportmodule bewirkt. Alternativ zu dieser Lösung kann auch ein zentraler Antrieb jedes Moduls über Ketten, Riemen und Zahnräder erfolgen, wobei nur ein Antriebsmotor pro Modul verwendet wird.

Fig. 4 zeigt eine Darstellung eines Getriebes für den Synchronantrieb von Unterflurband und Seitenbändern. Die bei der Schwenkbewegung erforderliche Drehung der Laufrolle für das Unterflurband erfolgt um den zentralen Drehpunhkt 7. Hierbei bezeichnet 12 eine Antriebswelle, 13 Kegelräder zum Antrieb der Laufrolle für das Unterflurband, 14 Zahnriemen, 15 Stirnräder und 16 Zahnriemenscheiben für den Antrieb der seitlichen Laufrrollen 9 und 9a.

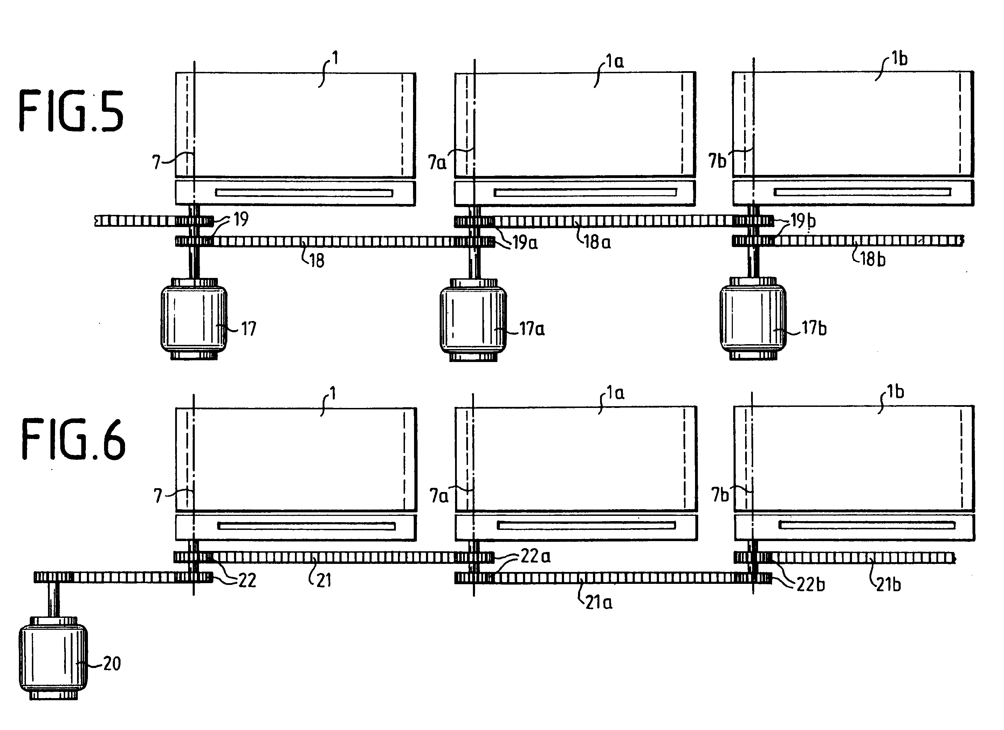

Fig. 5 zeigt eine weitere Ausführungsform der Erfindung, wobei durch die Motoren 17, 17a und 17b separat angetriebene Transportmodule 1, 1a und 1b durch Zahnketten 18, 18a und 18b und Zahnräder 19, 19a und 19b synchron angetrieben werden.

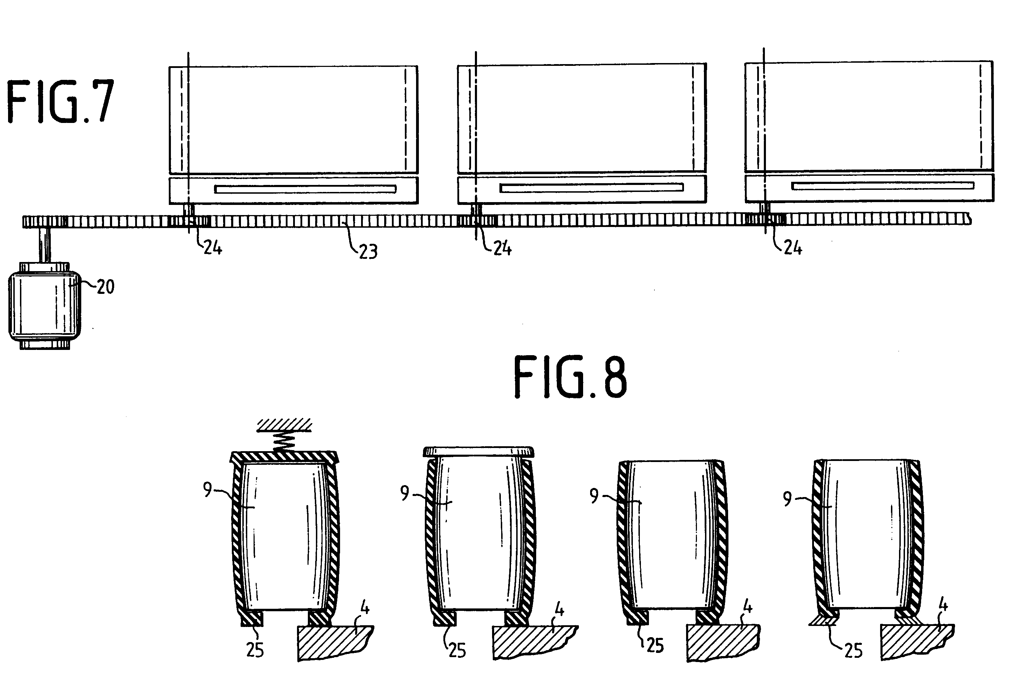

Fig. 6 und Fig. 7 zeigen weitere Ausführungsbeispiele von zentral angetriebenen Transportmodulen 1, 1a und 1b. Hierbei bezeichnet 20 einen zentralen Antriebsmotor, 21, 21a, 21b und 23 Zahnketten und 22, 22a, 22b und 24 mit diesen gekoppelte Zahnräder.

Fig. 8 veranschaulicht eine weitere Ausführungsform der Erfindung. Um zu verhindern, daß Gegenstände wie dünnes Papier zwischen die senkrecht aufeinanderstehenden Förderbänder 4 und 5 bzw. 6 geraten, werden danach elastische Säume oder Bürsten an den Unterkanten der senkrechten Rollen 9 und 10 angebracht. Diese können ebenfalls an der Unterkante von hinter den Seitenbändern liegenden Seitenblechen angebracht werden und wirken in beiden Fällen als elastische Dichtung zwischen Seitenbändern und Unterflurband.

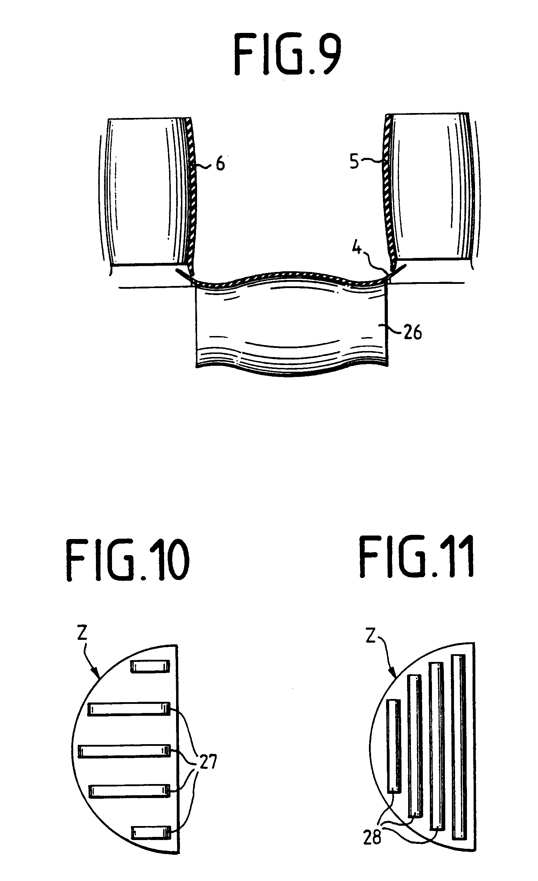

Um den Druck der Seitenbänder auf das Unterband zu erhöhen und damit die Dichtung zwischen beiden Bändern und Unterflurband zu vergrößern, können die Rollen ballig ausgeführt werden, so daß ein lateraler Druck der unteren Kanten der Seitenbänder auf das Unterflurband erfolgt. In Fig. 9 ist dies für eine ballig ausgeführte Laufrolle 26 des Unterflurbandes illustriert.

Fig. 10 zeigt eine weitere Ausführungsform der Erfindung, bei der Bänder 27 in das untere Gleitblech Z des Kopplungsstücks 8 eingebaut sind. Die Bänder 27 haben die Wirkung, daß das Gut auch im Bereich der Kopplungsstücke 8 gefördert wird. Durch eine geeignet gewählte Geschwindigkeit der Bänder 27 kann eine eventuelle Reibung des Transportguts kompensiert werden. Dies kann auch mit Rollen 28, die in den Teil Z des Kopplungsstücks 8 eingebaut sind, bewirkt werden (Fig. 11).

Bei vereinfachten Ausführungen der erfindungsgemäßen Fördereinrichtung können die angetriebenen Seitenbänder entfallen und durch Freilaufbänder oder geeignete Leitbleche ersetzt werden.

Obwohl die Erfindung anhand eines bestimmten Schwenkmechanismus dargestellt worden ist, ist es für den Fachmann klar, daß auch andere Schwenkmechanismen in einer erfindungsgemäßen Fördereinrichtung verwendet werden können. Weiter können die Transportbänder durch angetriebene Rollen oder andere Transportmechanismen ersetzt werden.

## Patentansprüche

1. Modulare Fördereinrichtung, bestehend aus zwei oder mehr aneinandergereihten und auf einem Grundgestell (2) angebrachten Transportmodulen (1, 1a, 1b), wobei jeder Transportmodul (1, 1a, 1b) ein Rahmengestell (3) aufweist, auf dem jeweils ein Bodenfördermittel (4) und zwei seitliche Führungsmittel (5, 6) montiert sind, das Rahmengestell (3) jedes Transportmoduls (1, 1a, 1b) zur Ausschleusung des Gutes aus dem gegebenen Transportmodul gegenüber dem Grundgestell (2) und den anderen Transportmodulen bewegbar ist, dadurch gekennzeichnet, daß die seitlichen Führungsmittel (5, 6) um feststehende hintere Achsen drehbar sind, und daß die Module (1, 1a, 1b) jeweils an einem Zwischenstück (8) zusammenstoßen und einen durchgehenden Transportweg bilden.

2. Modulare Fördereinrichtung nach Anspruch 1, dadurch gekennzeichnet, daß das Rahmengestell (3) gegenüber dem Grundgestell (2) um eine Drehachse (7, 7a, 7b) drehbar ist.

3. Modulare Fördereinrichtung nach Anspruch 1 oder 2, dadurch gekennzeichnet, daß als Bodenfördermittel ein Unterflurband (4) vorgesehen ist.

4. Modulare Fördereinrichtung nach Anspruch 1 - 3, dadurch gekennzeichnet, daß als Führungsmittel (5, 6) Seitenbänder mit feststehenden hinteren Rollen (9, 9a) vorgesehen sind.

5. Modulare Fördereinrichtung nach Anspruch 3 oder 4, dadurch gekennzeichnet daß das Zwischenstück (8) aus je einem einem Transportmodul (1) zugeordneten halbkreisförmigen Teil (X, Z) und einem diese Teile verbindenden, den halbkreisförmigen Teilen (X, Z) angepaßten Teil (Y) besteht und das Unterflurband (4) mit einem schmalen Spalt vor den Kanten der Teile X und Z des Zwischenstücks (8) läuft.

6. Modulare Fördereinrichtung nach Anspruch 5, dadurch gekennzeichnet, daß das Zwischenstück (8) Bänder (27) und/oder Rollen (28) zur Weiterförderung des Gutes aufweist.

7. Modulare Fördereinrichtung nach Anspruch 4 oder den folgenden, dadurch gekennzeichnet, daß die Seitenbänder (5, 6) und das Unterflurband (4) über Rollen (9, 9a) angetrieben sind.

8. Modulare Fördereinrichtung nach Anspruch 7, dadurch gekennzeichnet, daß die Rollen (9a, 10, 10a) am ausschwenkbaren Ende des Transportmoduls (1, 1a, 1b) mittels Federelementen (11) federnd gelagert sind.

9. Modulare Fördereinrichtung nach Anspruch 7 oder 8, dadurch gekennzeichnet, daß die Rollen (9, 9a, 10, 10a) ballig ausgebildet sind.

10. Modulare Fördereinrichtung nach Anspruch 7 oder folgenden, dadurch gekennzeichnet, daß an den Unterkanten der Rollen 9, 9a, 10, 10a) elastische Säume angeordnet sind.

11. Modulare Fördereinrichtung nach Anspruch 4 oder den folgenden, dadurch gekennzeichnet, daß das Unterflurband (4) und die Seitenbänder (5, 6) durch einen gemeinsamen Antrieb über Kegelräder (14) und Zahnriemen (15) angetrieben sind.

12. Modulare Fördereinrichtung nach Anspruch 4 oder den folgenden, dadurch gekennzeichnet, daß das Unterflurband (4) und die Seitenbänder (5, 6) über Zahnräder (19) und Zahnketten (18) angetrieben sind.

## Claims

1. Modular conveyor consisting of two or more transport modules (1, 1a, 1b) arranged in succession and mounted on a base (2), wherein each transport module (1, 1a, 1b) comprises a frame (3), on each of which are mounted a base conveying means (4) and two lateral guide means (5, 6), and the frame (3) of each transport module (1, 1a, 1b) is movable, for the discharge of the stock from the respective transport module, relative to the base (2) and the other transport modules, characterised thereby that the lateral guide means (5, 6) are rotatable about fixed rearward axes and that the modules (1, 1a, 1b) each abut an intermediate member (8) and form a continuous transport path.

2. Modular conveyor according to claim 1, characterised thereby that the frame (3) is rotatable relative to the base (2) about a rotational axis (7, 7a, 7b).

3. Modular conveyor according to claim 1 or 2, characterised thereby that a floor belt (4) is provided as base conveying means.

4. Modular conveyor according to claims 1 to 3, characterised thereby that lateral belts with fixedly disposed rearward rollers (9, 9a) are provided as guide means (5, 6).

5. Modular conveyor according to claim 3 or 4, characterised thereby that the intermediate member (8) consists of a respective semicircular part (X, Z) associated with each transport module (1) and a part (Y) matched to the semicircular parts (X, Z) and connecting these parts, and the floor belt (4) runs with a narrow gap in front of the edges of the parts (X and Z) of the intermediate member (8).

6. Modular conveyor according to claim 5, characterised thereby that the intermediate member (8) comprises belts (27) and/or rollers (28) for the further conveying of the stock.

7. Modular conveyor according to claim 4 or the following, characterised thereby that the lateral belts (5, 6) and the floor belt (4) are driven by way of rollers (9, 9a).

8. Modular conveyor according to claim 7, characterised thereby that the rollers (9a, 10, 10a) are resiliently mounted at the outwardly pivotable end of the transport module (1, 1a, 1b) by means of spring elements (11).

9. Modular conveyor according to claim 7 or 8, characterised thereby that the rollers (9, 9a, 10, 10a) are constructed spherically.

10. Modular conveyor according to claim 7 or following, characterised thereby that elastic borders are arranged at the lower edges of the rollers (9, 9a, 10, 10a).

11. Modular conveyor according to claim 4 or the following, characterised thereby that the floor belt (4) and the lateral belts (5, 6) are driven by a common drive by way of bevel gears (14) and toothed belts (15).

12. Modular conveyor according to claim 4 or the following, characterised thereby that the floor belt (4) and the lateral belts (5, 6) are driven by way of gearwheels (19) and gear chains (18).

## Revendications

1. Appareil de transport modulaire constitué de deux ou davantage de modules de transport (1, 1a, 1b) disposés en file sur un bâti (2), chaque module de transport (1, 1a, 1b) comportant un châssis (3), sur lequel sont montés un moyen de transport inférieur (4) et deux moyens de guidage latéraux (5, 6), le châssis (3) de chaque module de transport (1, 1a, 1b) pouvant être animé d'un mouvement par rapport au bâti (2) et par rapport aux autres modules de transport pour faire sortir le matériau du module de transport concerné, caractérisé en ce que les moyens de guidage latéraux (5, 6) sont rotatifs autour d'axes arrière stationnaires et que les modules (1, 1a, 1b) se joignent chaque fois au droit d'un raccord intermédiaire (8) et forment un trajet de transport continu.

2. Appareil de transport modulaire selon la revendication 1, caractérisé en ce que le châssis (3) est rotatif autour d'un axe de rotation (7, 7a, 7b) par rapport au bâti (2).

3. Appareil de transport modulaire selon la revendication 1 ou 2, caractérisé en ce qu'une bande de fond (4) est prévue comme moyen de transport inférieur.

4. Appareil de transport modulaire selon les revendications 1-3, caractérisé en ce que des bandes latérales à rouleaux arrière stationnaires (9, 9a) sont prévues comme moyens de guidage (5, 6).

5. Appareil de transport modulaire selon la revendication 3 ou 4, caractérisé en ce que le raccord intermédiaire (8) se compose de deux parties semi-circulaires (X, Z) coordonnées chacune à un module de transport (1) et d'une partie (Y) qui les relie et est adaptée aux parties semi-circulaires (X, Z), la bande de fond (4) circulant devant les bords des parties X et Z du raccord (8) en formant une fente étroite avec eux.

6. Appareil de transport modulaire selon la revendication 5, caractérisé en ce que le raccord intermédiaire (8) présente des bandes (27) et/ou des rouleaux (28) pour l'acheminement du matériau.

7. Appareil de transport modulaire selon la revendication 4 ou les revendications suivantes, caractérisé en ce que les bandes latérales (5, 6) et la bande de fond (4) sont entraînées par l'intermédiaire de rouleaux (9, 9a).

8. Appareil de transport modulaire selon la revendication 7, caractérisé en ce que les rouleaux (9a, 10, 10a) situés à l'extrémité du module de transport (1, 1a, 1b) pouvant pivoter vers l'extérieur, sont montés élastiquement au moyen d'éléments à ressorts (11).

9. Appareil de transport modulaire selon la revendication 7 ou 8, caractérisé en ce que les rouleaux (9, 9a, 10, 10a) ont une forme bombée.

10. Appareil de transport modulaire selon la revendication 7 ou les revendications suivantes, caractérisé en ce que des lisières élastiques sont disposées sur les bords inférieurs des rouleaux (9, 9a, 10, 10a).

11. Appareil de transport modulaire selon la revendication 4 ou les revendications suivantes, caractérise en ce que la bande de fond (4) et les bandes latérales (5, 6) sont entraînées, par l'intermédiaire de roues coniques (14) et de courroies crantées (15), par un entraînement commun.

12. Appareil de transport modulaire selon la revendication 4 ou les revendications suivantes, caractérisé en ce que la bande de fond (4) et les bandes latérales (5, 6) sont entraînées par l'intermédiaire de roues dentées (19) et de chaînés dentées (18).
